# EUROPÄISCHE PATENTSCHRIFT

(11) **EP 3 353 800 B1**
(45) Veröffentlichungstag und Bekanntmachung des Hinweises auf die Patenterteilung: **09.10.2019**
(21) Anmeldenummer: 16753295.1
(22) Anmeldetag: 02.08.2016
(51) Int. Cl.: H01H 71/08

(54) **SCHALTGERÄT**
SWITCHING DEVICE
APPAREIL DE COMMUTATION

(30) Priorität: 21.09.2015 DE 102015218108
(43) Veröffentlichungstag der Anmeldung: 01.08.2018
(73) Patentinhaber: Ellenberger & Poensgen GmbH, 90518 Altdorf (DE)
(72) Erfinder: ROTH, Herbert, 90518 Altdorf (DE)
(74) Vertreter: FDST Patentanwälte
(86) Internationale Anmeldenummer: PCT/EP2016/068463
(87) Internationale Veröffentlichungsnummer: WO 2017/050472

(56) Entgegenhaltungen:
- WO-A1-2006/027338
- WO-A1-2011/120881
- WO-A1-2015/059093
- DE-A1-102011 087 209
- DE-U1- 29 723 752

## Beschreibung

Die Erfindung betrifft ein Schaltgerät, insbesondere in Form eines anreihbaren elektrischen Schaltgerätes oder Reiheneinbaugerätes.

Ein elektrisches Schaltgerät, wie beispielsweise ein mechanischer, elektronischer oder mechatronischer Schutzschalter, weist typischerweise einen Einspeisungsanschluss auf, über den eine netzseitige und somit stromführende Hauptstromleitung anschließbar ist, sowie einen Lastanschluss, über den eine lastseitig abgehende Stromleitung anschließbar ist.

Als Schaltgeräteanordnung oder Stromverteilungssystem wird im Nachfolgenden insbesondere eine elektrische Installation mit einem oder mehreren elektrischen Laststromkreisen bezeichnet, denen aus einer gemeinsamen Hauptstromleitung Strom zugeführt ist, und die an eine gemeinsame Stromrückführung angeschlossen sind. Mit anderen Worten wird als Stromverteiler eine elektrische Schaltungseinrichtung bezeichnet, die es ermöglicht, den über eine gemeinsame Hauptstromleitung zugeführten Strom an mehrere parallele Laststromkreise zu verteilen. Dabei sind Sicherungsmechanismen vorgesehen, die jeden Laststromkreis einzeln gegen eine Überlast und/oder gegen Kurzschluss absichern.

Im Rahmen eines solchen Stromverteilers sind die Schaltgeräte insbesondere an den Zweigstellen vorgesehen, an denen die Laststromkreise von der Hauptstromleitung abzweigen. Die Schaltgeräte dienen hierbei dazu, den jeweils zugeordneten Laststromkreis im Bedarfsfall von der stromführenden Hauptleitung zu trennen.

Üblicherweise werden bei einer Aneinanderreihung einzelner Schaltgeräte interne Verdrahtungen, beispielsweise für eine Signalisierung oder BUS-Funktionalität, bereitgestellt. Die eingesetzten Schaltgeräte weisen hierfür integrierte Signal- oder Koppelkontakte auf, die benachbarte Schaltgeräte an den einander zugewandten Gerätestirnseiten entlang einer Reihenrichtung durchsetzen.

Im Zuge eines Stromverteilers sind die Schaltgeräte typischerweise als Reiheneinbaugeräte nebeneinander direkt auf einer Tragschiene (Hutschiene) montierbar. Die Schaltgeräte weisen hierzu gehäuserückseitig, das bedeutet im Montagezustand der Tragschiene zugewandt, eine Befestigungsvorrichtung zum Aufschnappen und/oder Verrasten auf der Tragschiene auf. Übliche Befestigungsvorrichtungen umfassen beispielsweise eine feste (kraftschlüssige) Haltegeometrie und/oder eine bewegbare (formschlüssige) Haltegeometrie zur lösbaren Verriegelung an der Tragschiene. Zur Betätigung weisen derartige Befestigungsvorrichtungen häufig ein manuell betätigbares Betätigungselement auf, mit dem zumindest eine der Haltegeometrien in eine verriegelnde oder entriegelnde Position bringbar ist.

Für die Montage oder Demontage derartiger Schaltgeräte ist jedoch ein gewisser Schwenkbereich oberhalb und/oder unterhalb der Tragschiene erforderlich, um die Schaltgeräte auf die Tragschiene aufzusetzen, beziehungsweise wieder von dieser zu entfernen. Dadurch entsteht einerseits ein erhöhter Platzbedarf innerhalb eines Schaltkastens. Andererseits kann insbesondere in einer Montagesituation innerhalb eines Reihenverbunds des Stromverteilers das Problem auftreten, dass die Befestigungsvorrichtung oder das damit gekoppelte Betätigungselement schlecht oder lediglich eingeschränkt zugänglich ist, sodass das Schaltgerät mitunter nicht einfach aus dem Reihenverbund gelöst werden kann.

Das Dokument DE 297 23 752 U1 offenbart mit den Ein/Ausgabenmodule auch ein Schaltgerät umfassend ein Gehäuse mit einer um eine Drehachse schwenkbaren Kappe und eine Befestigungsvorrichtung für eine direkte Montage auf einer Tragschiene, wobei die Kappe an einer der Gehäuseinnenseite zugewandten Seite mindestens einen Koppelkontakt zur elektrischen und/oder signaltechnischen Kontaktverbindung aufweist, und wobei bei einem Verschwenken der Kappe ein Schließen oder Lösen der Kontaktverbindung erfolgt, und wobei die Befestigungsvorrichtung ein am Gehäuse angeformtes, federelastisches Rastelement zur kraftschlüssigen Befestigung an einer Tragschienenstirnseite umfasst.

Aus der DE 10 2011 087 209 A1 ist ein Elektroinstallationsgerät bekannt, welches zur Befestigung an einer Profilschiene ausgebildet. Ein Befestigungselement, welches relativ zu einem Gehäuse des Elektroinstallationsgeräts in einer ersten Richtung veschiebbar gelagert ist, weist eine Kontur auf, welche in einer quer zur ersten Richtung orientierten zweiten Richtung in einer Verriegelungsposition formschlüssig mit der Profilschiene koppelbar ist.

Aus der WO 2006/027338 A1 ist ein mehrphasiges Strom-Einspeisemodul mit in einem Gehäuse vorgesehenen Anschlussklemmen bekannt, die mittels eines Brückensteckers zur Kontaktierung mit einem mehrphasigen Energieverteilungssystem elektrisch verbunden sind.

Der Erfindung liegt die Aufgabe zugrunde, ein besonders geeignetes anreihbares Schaltgerät anzugeben. Dieses soll insbesondere hinsichtlich einer Trennung einer Kontaktierung zu benachbarten Schaltgeräten sowie zum Lösen einer Befestigungsvorrichtung an einer Tragschiene besonders benutzer- und montagefreundlich sowie betriebssicher sein.

Aufklappen oder Aufschwenken der Kappe, bei dem die Kappe zumindest teilweise von dem Gehäuse weg verschwenkt wird, werden entsprechend die Kontaktverbindung geöffnet und die Befestigungsvorrichtung entriegelt.

Zum Zwecke einer Montage des Schaltgeräts auf der Tragschiene wird das Schaltgerät mit einer offenen beziehungsweise aufgeschwenkten Kappe im Wesentlichen senkrecht auf die Tragschiene aufgesetzt oder aufgeschnappt. Anschließend wird die Kappe auf die geschlossene Position hin verschwenkt. Dadurch wird die Befestigungsvorrichtung betätigt, sodass das Schaltgerät vorzugsweise formschlüssig an der Tragschiene verriegelt gehalten ist. Zur Demontage wird die Kappe entsprechend geöffnet und somit die Befestigungsvorrichtung entriegelt, wodurch das Schaltgerät abschließend im Wesentlichen senkrecht von der Tragschiene entfernt werden kann.

Das Schaltgerät weist im Zuge seiner Ausgestaltung als ein Reiheneinbaugerät vorzugsweise gehäuserückseitig, das bedeutet auf der im Montagezustand der Tragschiene zugewandten Gehäuseschmalseite, eine profilierte Aufnahme (Aufsetznut) auf. Die Befestigungsvorrichtung ist zweckmäßigerweise im Bereich der Aufnahme angeordnet und umgreift die Tragschiene im befestigten (verriegelten) Zustand zumindest teilweise, sodass die Tragschiene betriebssicher zwischen der Befestigungsvorrichtung und der Aufnahme gehalten ist.

Die gehäusefrontseitige Schmalseite ist somit in der vorgesehenen Einbausituation des Schaltgeräts dem Benutzer zugewandt. Die Profilrichtung der Aufnahme (und der mit dieser korrespondierenden Tragschiene) definiert eine Reihenrichtung (Tragschienenlängsrichtung), entlang derer mehrere Schaltgeräte im Montagezustand aneinander aufreihbar sind. Die zu dieser Reihenrichtung senkrecht orientierten Gehäuseseiten sind nachfolgend als (Gehäuse-)Stirnseiten bezeichnet. Die beiden übrigen Gehäuseschmalseiten sind nachfolgend entsprechend der bestimmungsgemäßen Einbaustellung der Schaltgeräte als (Gehäuse-)Oberseite beziehungsweise (Gehäuse-)Unterseite bezeichnet.

Die Kappe ist als ein Kontaktträger für die vorzugsweise als zweischenklige Federkontakte ausgeführten Koppelkontakte nach Art einer Klemmkontaktierung ausgestaltet. In einer geeigneten Ausgestaltungsform weist die Kappe im Bereich der Drehachse beispielsweise einen etwa zylinderartigen Lagerzapfen auf, der im Montagezustand in hohlzylinderartigen Lagerstellen (Lagerbuchsen) des Gehäuses eingreift beziehungsweise drehbeweglich einliegt. Die umgekehrte Anordnung von Lagerzapfenund Lagerbuchse ist grundsätzlich ebenfalls möglich.

Zum Zwecke einer einfachen Kontaktierung benachbarter Schutzgeräte ist die Kappe vorzugsweise stirnseitig angeordnet, das heißt die Kappe ist bezüglich einer zwischen den (Gehäuse-)Stirnseiten angeordneten Mittelebene zu einer Stirnseite hin versetzt angeordnet, sodass die Kappe das jeweilige Gehäuse zumindest teilweise stirnseitig überragt. Das Gehäuse weist auf der gegenüberliegenden Stirnseite korrespondierende (Füge-)Aufnahmen an der Oberseite auf, sodass bei einer zugeklappten Kappe die Koppelkontakte einerseits mit Gegenkontakten des Schutzgeräts und andererseits mit Gegenkontakten eines jeweils angereihten Schutzgeräts elektrisch leitfähig kontaktiert sind.

Mit anderen Worten greift die Kappe beziehungsweise greifen die Koppelkontakte im geschlossenen oder zugeklappten (eingeklappten oder eingeschwenkten) Zustand zumindest teilweise sowohl in das Gehäuse als auch in das jeweils angereihte Gehäuse des benachbarten Schutzgeräts ein. Das heisst, dass ein erster Kontaktschenkel des Federkontakts mit einem geräteinternen Gegenkontakt kontaktiert ist, und dass ein zweiter Kontaktschenkel des Federkontakts mit einem Gegenkontakt des benachbarten Schaltgeräts kontaktiert ist. Die Koppelkontakte der Kappe wirken somit nach Art einer Leiterbrücke zwischen benachbarten Schutzgeräten, sodass bei einem Stromverteiler die Gehäuse im Reihenverbund elektrisch leitfähig in Reihenrichtung beziehungsweise Tragschienenlängsrichtung durchsetzt sind.

In einem Reihenverbund ist das stirnseitig äußerste Schaltgerät vorzugsweise an eine Einspeisung zum Anschluss an eine netzseitige und somit stromführende Stromleitung gekoppelt. Durch die gehäuseinterne Kontaktierung wird der Strom somit berührungssicher abgeschirmt geführt.

Des Weiteren können praktisch beliebig viele Schaltgeräte aneinander gereiht werden, ohne Stromschienenverbindungen oder Leitungsverbindungen unterschiedlicher Länge bereitzustellen. Ferner sind zur Kontaktierung der Schaltgeräte untereinander beziehungsweise miteinander keine Schraubkontaktverbindungen herzustellen, wodurch die Montage und Demontage der Schaltgeräte weiter vereinfacht wird. Die Gehäuse der angereihten Schaltgeräte können daher vorteilhafterweise geschlossen und ohne Kontaktierung an deren in der Reihenanordnung aneinander liegenden Gehäuseseiten ausgeführt sein. Dadurch verbessert sich weiterhin die Übersichtlichkeit eines derartig gebildeten Stromverteilers im Hinblick auf eine Verkabelung und einen Anschluss mehrerer Laststromkreise.

Das Schaltgerät ist vorzugsweise als ein Schutzschalter zur Absicherung für einen Laststromkreis ausgeführt. Unter Schutzschalter sind insbesondere thermische, thermisch-magnetische und elektronische Geräteschutzschalter, Schaltrelais oder Überstromschutzgeräte zu verstehen, die eine gehäuseinterne Elektronik aufweisen. Das Schaltgerät weist hierzu vorzugsweise gehäusefrontseitig mindestens einen (Last-)Anschluss für einen Laststromkreis auf, wobei eine betätigbare Schalteinrichtung vorzugsweise zwischen dem mit der Einspeisung gekoppelten Gegenkontakt und dem Lastanschluss angeordnet ist. Dadurch wird bei einem Öffnen der Kappe gleichzeitig auch ein angeschlossener Laststromkreis von der Stromzufuhr getrennt.

Die (Geräte-)Elektronik ist vorzugsweise dazu geeignet und eingerichtet, in Abhängigkeit eines Schaltsignals die Schalteinrichtung des Schaltgeräts zu betätigen. Der Schwenkmechanismus der Kappe weist hierzu mindestens einen Koppelkontakt auf, der zum vorzugsweise geräteselektiven Öffnen und Schließen einer Kontaktverbindung zur Führung des Schaltsignals vorgesehen ist. Die entsprechende Strom- und/oder Signalführungsverbindung ist geeigneterweise bidirektional und kann auch als Daten- oder Signalbus ausgeführt sein.

In einer geeigneten Weiterbildungsform ist die Drehachse der Kappe im Montagezustand im Wesentlichen parallel zur Tragschiene orientiert und nahe einer Gehäuseschmalseite an der der Tragschiene zugewandten Rückseite angeordnet. Die Drehachse ist bevorzugterweise nahe einem Eckbereich der Geräte- oder Gehäuseoberseite angeordnet. Die Kappe bildet somit im Wesentlichen ein Abdeckteil für die Geräte- oder Gehäuseoberseite, sodass jene einem Benutzer auch in einer Einbausituation innerhalb eines Reihenverbundes in einem Schaltschrank einfach zugänglich und verschwenkbar ist.

Zur Befestigung auf der Tragschiene umfasst die Befestigungsvorrichtung ein am Gehäuse angeformtes, federelastisches Rastelement sowie ein innerhalb des Gehäuses linear verschiebebeweglich gelagertes Schiebeelement. Das Schaltgerät ist im Montagezustand mittels des Rastelements kraftschlüssig an einer Tragschienenstirnseite betriebssicher gehalten. Das Schiebeelement ist mittels des Schwenkmechanismuses an die Kappe linear verschiebbar gekoppelt.

Bei geschlossener Kappe ist das Schiebeelement vorzugsweise derart in den Bereich der rückseitigen Gehäuseaufnahme verschoben, dass es die Tragschiene auf der dem Rastelement gegenüberliegenden Tragschienenstirnseite zumindest teilweise, insbesondere formschlüssig, hintergreift. Mit anderen Worten ist die Tragschiene im Montagzustand somit von beiden (Tragschienen-)Stirnseiten her mittels der Befestigungsvorrichtung umgriffen beziehungsweise hintergriffen.

Die Befestigungsvorrichtung umfasst somit zwei voneinander unabhängige Haltegeometrien, wobei eine funktionale Trennung zwischen dem kraftschlüssigen Aufschnappen/Verrasten des Rastelements und dem formschlüssigen Ver- beziehungsweise Entriegeln des Schiebeelements realisiert ist.

Zur Montage wird das Schaltgerät bei geöffneter, d. h. in Offenhaltung verschwenkter Kappe senkrecht auf die Tragschiene gesetzt, wobei das federelastische Rastelement mit der Tragschienenstirnseite verrastet oder verklipst wird. Anschließend wird durch das Verschwenken der Kappe das Schiebeelement in die verriegelnde Position verschoben, sodass das Schaltgerät form- und kraftschlüssig an den Stirnseiten der Tragschiene befestigt ist.

Zu einer Demontage wird die Kappe geöffnet, und das Gehäuse des Schaltgeräts wird beispielsweise von dem Rastelement weg verschwenkt, sodass die Tragschiene aus dem Kraftschluss heraus gelöst wird. Für den Fall einer gedrängten Einbausituation, in der kein ausreichender Platz für ein Verschwenken des Gehäuses vorhanden ist, ist das Rastelement in einer vorteilhaften Ausführung mit einer betätigbaren Gehäuseausbuchtung an der Gehäuseunterseite (das heißt der der Kappe gegenüberliegenden Seite des Gehäuses) gekoppelt, wobei durch die Gehäuseausbuchtung die kraftschlüssige Befestigung an der Tragschienenstirnseite lösbar ist.

Zu diesem Zwecke ist die Gehäuseausbuchtung vorzugsweise derart an das Rastelement und/oder an das Gehäuse angeformt, dass eine Seitenwand der Gehäuseausbuchtung betätigbar oder biegbar ist, wobei bei einer Betätigung der Seitenwand das Rastelement hebelartig in eine den Kraftschluss öffnende Position verschwenkt wird. Bei einer aufgeklappten Kappe ist das Schaltgerät somit bei einer Betätigung der Gehäuseausbuchtung im Wesentlichen senkrecht von der Tragschiene entfernbar. Dadurch ist sowohl eine besonders einfache Montage als auch eine besonders einfache und benutzerfreundliche Demontage des Schaltgeräts ermöglicht.

In einer vorteilhaften Ausführungsform ist die Gehäuseausbuchtung zur Aufnahme eines Werkzeugs, insbesondere zur Aufnahme eines Schraubendreherkopfes ausgebildet. Dadurch ist das Rastelement auch in einer Einbausituation mit beengten Einbauverhältnissen, insbesondere bei einem Reiheneinbaugerät innerhalb eines Schaltschranks, einfach lösbar.

In einer bevorzugten Ausgestaltung ist die Kappe an der drehachsenseitigen Schmalseite mit einem federelastischen Umlenkelement insbesondere nach Art eines Schwenk-Schubgelenks gekoppelt. Dadurch wird die Schwenkbewegung der Kappe in eine zur Verschwenkrichtung und Tragschienenlängsrichtung quer gerichtete, das bedeutet in eine Richtung senkrecht zur Tragschienenstirnseite orientierte Linearbewegung des Schiebeelements umgesetzt. Somit ist eine konstruktiv besonders einfache Verriegelung beziehungsweise Entriegelung der Befestigungsvorrichtung realisiert.

In einer vorteilhaften Weiterbildung weist das Umlenkelement insbesondere ein etwa kreisbogenartiges Blattfederelement auf, wobei das Schiebeelement tangential fluchtend an einem tragschienenseitigen Ende des Blattfederelements angeordnet ist. In einer besonders bevorzugten Ausgestaltung liegt das Blattfederelement hierbei insbesondere innerhalb des Gehäuses zwischen zwei komplementär geformten kreisbogenartigen Innenwandungen als Abrutsch- oder Gleitführung an. Die Innenwandungen sind in einem der Drehachse zugeordneten Eckbereich, das heisst insbesondere dem oberen rückseitigen Eckbereich, angeordnet und radial zueinander beabstandet, wobei das Blattfederelement im Bereich seiner kreisbogenartigen Bauchung zwischen den Innenwandungen verschiebebeweglich einliegt.

Beim Öffnen oder Aufklappen der Kappe wird eine betätigende Kraft in Richtung der Tragschiene auf das kappenseitige Ende des Blattfederelements ausgeübt. Durch ein Gleiten des Blattfederelements zwischen und entlang den Innenwandungen wird somit die betätigende Kraft um etwa 90° umgelenkt und dadurch das Schiebeelement aus dem Gehäuse heraus in die verriegelnde Position gedrückt beziehungsweise geschoben.

Beim Schließen beziehungsweise Zuklappen der Klappe wird das Blattfederelement entsprechend in die Gegenrichtung bewegt, wodurch das Schiebeelement in eine entriegelnde Stellung in das Gehäuse zumindest teilweise hineingezogen beziehungsweise mitgeschleppt wird.

Bei einem Verschwenken der Kappe wird das Blattfederelement somit nicht, oder lediglich kaum, gestaucht beziehungsweise gestreckt, da die Innenwandungen eine kraftaufwendige Verformung des Blattfederelements vorteilhaft begrenzen. Stattdessen wird die Biegeelastizität vielmehr dazu genutzt, dass das Blattfederelement der betätigenden Kraft durch ein Abgleiten oder Abrutschen an den Innenwandungen im Zuge der Kraft- und Bewegungsumlenkung ausweicht.

Dadurch wird das Schiebeelement nicht durch eine Federspannung des Blattfederelements in eine verriegelnde oder entriegelnde Position gedrängt. Bei einem Verschwenken der Kappe muss die Federspannung somit nicht zusätzlich überwunden werden, wodurch die Kappe besonders einfach in beide Richtungen verschwenkbar ist. Die Befestigungsvorrichtung ist somit stets einfach betätigbar, sodass sowohl ein einfaches Verriegeln als auch ein einfaches Entriegeln an der Tragschiene sichergestellt ist.

Im verriegelten Zustand blockiert somit die zugeklappte Kappe ein Verschieben des Schiebeelements, sodass ein besonders rüttelfreier und betriebssicherer Halt an der Tragschiene sichergestellt ist. Dadurch wirken weder im verriegelten oder entriegelten Zustand nennenswerte Feder-, Torsions- oder Biegekräfte auf das Blattfederelement, was sich vorteilhaft auf die Langlebigkeit des Blattfederelements, und somit auf die Langlebigkeit des Schutzgeräts überträgt.

In einer zweckmäßigen Ausführung weist die Kappe an der drehachsenseitigen Schmalseite einen Führungszapfen auf, der innerhalb einer nutenartigen Profilkammer des Umlenkelements angeordnet ist. Der Führungszapfen ist vorzugsweise mit einem walzenartigen Kopfbereich ausgestaltet, wobei der Kopfbereich vorzugsweise formschlüssig innerhalb der Profilkammer einliegt. Die etwa rechteckige Profilkammer weist geeigneterweise einen länglichen Profilschlitz auf, durch den die Kappe, oder ein mit dem Kopfbereich gekoppelter Schaftbereich der Kappe, zumindest teilweise hindurchgeführt ist. Dadurch ist eine etwa walzengelenkartige Kopplung zwischen der Kappe und dem Blattfederelement realisiert.

Die Profilkammer ist in einer geeigneten Ausführungsform im Wesentlichen senkrecht zum Schiebeelement an dem dem Schiebeelement abgewandten Ende des Blattfederelements angeordnet. Zum Zwecke einer verbesserten Kraftübertragung der (Ver-)Schwenkbewegung der Kappe in die Linearbewegung des Schiebelements weist die Profilkammer eine blattfederseitige, keilartige Strebe auf, die die Profilkammer gegenüber dem Blattfederelement abstützt.

In einer zweckmäßigen Ausgestaltung ist die Drehachse der Kappe als Dreh- oder Angelpunkt zwischen dem Führungszapfen und dem mindestens einen Koppelkontakt angeordnet. Der Führungszapfen ist somit insbesondere lastarmseitig von der Drehachse angeordnet, wobei der mindestens eine Koppelkontakt kraftarmseitig davon positioniert ist. Vorzugsweise weist die Kappe kraftarmseitig eine größere Länge auf, sodass ein möglichst großer und einfach verschwenkbarer Hebel realisiert ist. Das heisst, die Drehachse ist nicht unmittelbar im rückseitigen oberen Eckbereich des Gehäuses angeordnet, sondern etwa um die Höhe des Umlenkelements zur Gehäusefrontseite hin versetzt angeordnet. Dadurch ist eine besonders einfache Betätigung der Befestigungsvorrichtung sichergestellt.

Durch die verschwenkbar gelagerte Kappe ist somit ein vergleichsweise großes Drehmoment mit relativ geringem Kraftaufwand erzeugbar. Durch das Umlenkelement wird die Kraftarmbewegung der Kappe in die Linearbewegung des Schiebeelements zur Ver- oder Entriegelung umgesetzt. Dadurch ist bei einer geschlossenen Kappe einerseits ein betriebssicherer und rüttelfester Formschluss an der Tragschiene ermöglicht. Andererseits ist sichergestellt, dass der Formschluss bei Bedarf besonders einfach lösbar beziehungsweise entriegelbar ist.

Bei einem Schließen der Kappe wird der Führungszapfen kreissegmentartig verschwenkt. Durch die walzenkopfartige Lagerung innerhalb der Profilkammer drückt der Kopfbereich die Profilkammer hierbei in Richtung senkrecht zur Tragschiene hin. Die Profilkammer wird daraufhin zur Gehäuserückseite hin gedrückt und beaufschlagt dabei das Blattfederelement, welches wiederum durch ein Abgleiten oder ein Abrutschen an den Innenwandungen das Schiebeelement mit der Tragschiene verriegelt.

Entsprechend wird bei einem Öffnen der Kappe der Führungszapfen kreissegmentartig in die Gegenrichtung verschwenkt. Dadurch wird die Profilkammer um eine Strecke proportional zum Verschwenkwinkel der Kappe in Richtung der Gehäusefrontseite quasi 'hochgezogen', wodurch das Blattfederelement und somit das Schiebeelement in eine entriegelnde Position mitgeschleppt werden.

In einer besonders vorteilhaften Ausgestaltung weisen das Schiebeelement und die Profilkammer jeweils blattfederseitig einen etwa U-förmigen Führungsfortsatz auf. Die vertikalen U-Schenkel der Führungsfortsätze sind hierbei vorzugsweise derart ausgerichtet, dass sie jeweils tangential zum Blattfederelement in Richtung des Eckbereichs orientiert sind, wobei das Blattfederelement jeweils im inneren Bereich der vertikalen U-Schenkel an dem horizontalen U-Schenkel angebunden ist.

Die vertikalen U-Schenkel dienen insbesondere einer Linearführung in entsprechenden nutenartigen Aufnahmen im Gehäuseinneren. Dadurch sind einerseits die Profilkammer im Wesentlichen lediglich in einer senkrechten Richtung zur Tragschiene und andererseits das Schiebeelement im Wesentlichen lediglich in einer senkrechten Richtung zur Tragschienenstirnseite verschiebbar. Durch die linear bewegliche Lagerung mittels der vertikalen U-Schenkel wird sichergestellt, dass das Blattfederelement an den Innenwandungen zur Kraft- und Bewegungsumlenkung entlang gleitet (abgleitet/abrutscht) und nicht kraftaufwendig gestaucht oder gebogen wird.

Zu diesem Zwecke sind die nutenartigen Aufnahmen für die Linearlagerung der vertikalen U-Schenkel in einer besonders geeigneten Ausbildung durch einen Zwischenbereich zwischen dem Gehäuse und der gehäuseseitigen Innenwandung gebildet. Dadurch ist eine besonders stabile Lagerung der Führungsfortsätze sichergestellt.

In einer geeigneten Ausbildung weist der horizontale U-Schenkel des schiebeelementseitigen Führungsfortsatzes ein noppenartiges Stopperelement auf, das die Linearbewegung des Schiebeelements bei einem Schließen der Kappe durch Anschlag an einer Gehäusewand in Richtung auf die Tragschienenstirnseite hin begrenzt.

Nachfolgend wird ein Ausführungsbeispiel der Erfindung anhand einer Zeichnung näher erläutert. Darin zeigen:
- Fig. 1: in perspektivischer Darstellung einen Stromverteiler mit vier aneinandergereihten Schutzgeräten,
- Fig. 2: eine Explosionsdarstellung eines Schutzgeräts mit einer Kappe sowie mit einem mit der Kappe gekoppelten Umlenkelement,
- Fig. 3: die Kappe in perspektivischer Darstellung,
- Fig. 4a und 4b: das Umlenkelement in verschiedenen perspektivischen Darstellungen, und
- Fig. 5a und 5b: in Schnittdarstellung das Schutzgerät mit verschwenkbarer Kappe und mit dem damit gekoppelten Umlenkelement für verschiedene Kappenstellungen.

Einander entsprechende Teile und Größen sind in allen Figuren stets mit den gleichen Bezugszeichen versehen.

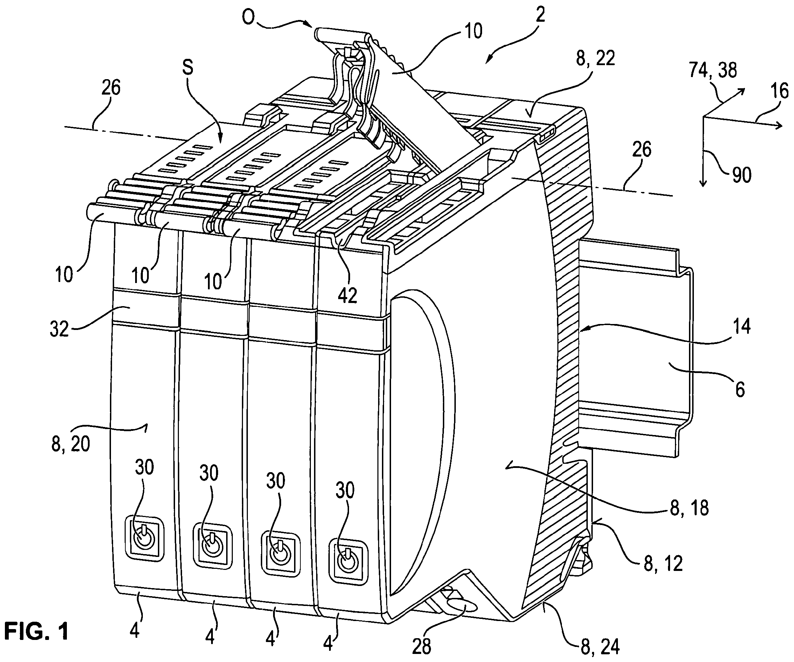

Der in Fig. 1 dargestellte Stromverteiler 2 umfasst vier Schutzgeräte 4, die nebeneinander aufgereiht an einer Tragschiene 6 montiert sind. Jedes Schaltgerät 4 umfasst ein separates, das heißt von den anderen Schaltgeräten 4 getrenntes Gehäuse 8 mit einer verschwenkbaren (Gehäuse-)Kappe 10. Das Gehäuse 8 und die Kappe 10 sind zweckmäßigerweise aus einem Isoliermaterial hergestellt. Die Schaltgeräte 4 sind nach Art eines Reiheneinbaugeräts ausgebildet, und weisen dementsprechend an einer jeweiligen Gehäuserückseite 12 eine nutenartige Aufnahme 14 auf, mit der das jeweilige Schutzgerät 4 zu Montagezwecken auf der Tragschiene 6 aufsetzbar ist.

Die Profilrichtung dieser Aufnahme 14 - und entsprechend im Montagezustand auch die Profilrichtung der mit dieser Aufnahme 14 korrespondierenden Tragschiene 6 - definieren eine Reihenrichtung (Tragschienenlängsrichtung) 16, entlang derer die Schaltgeräte 4 aneinander aufgereiht sind. Die in Reihenrichtung 16 aneinander gegenüberliegenden Gehäuseflächen eines jeden Schaltgeräts 4 sind nachfolgend als (Gehäuse-)Stirnseiten 18 des jeweiligen Schaltgeräts 4 bezeichnet.

Die zu der Gehäuserückseite 12 entgegengesetzte Gehäuseseite eines jeden Schaltgeräts 4 ist als (Gehäuse-)Frontseite 20 des Schaltgeräts 4 bezeichnet. Diese Frontseite 20 ist, wenn der Stromverteiler 2 in einem Schaltschrank montiert ist, einem Benutzer zugewandt. Die beiden übrigen Gehäuseseiten eines jeden Schaltgeräts 4 sind - entsprechend der konventionsgemäßen Einbaustellung des Schaltgeräts 4 - als (Gehäuse-)Oberseite 22 beziehungsweise (Gehäuse-)Unterseite 24 unabhängig von der tatsächlichen Stellung im umgebenden Raum bezeichnet.

Die Kappe 10 bildet eine Kontaktierungs- und Schwenkmechanismusseite des Gehäuses 8, und ist an der Oberseite 22 angeordnet. Die Kappe 10 ist um eine Drehachse 26 verschwenkbar gelagert, wobei die Drehachse 26 parallel zur Reihenrichtung 16 orientiert ist.

Zur Zuführung eines Stroms umfasst der Stromverteiler 2 ein nicht näher dargestelltes Einspeisungsgerät das beispielsweise mittels einer Schraub- oder Schneidklemme an einen flexiblen Draht- oder Litzenleiter zur Stromführung angeschlossen ist. Die Kontaktverbindung aller Schaltgeräte 4 mit diesem Einspeisungsgerät erfolgt mittels der Kappen 6 eines jeden Schaltgeräts 4. Die Kappen 10 sind hierzu als Kontaktträger ausgeführt, und mittels des Kontaktierungs- und Schwenkmechanismus zum Öffnen und Schließen der jeweiligen Kontaktverbindung zwischen zwei zugeordneten Schaltgeräten 4 geeignet und eingerichtet.

Die (Gehäuse-)Frontseite 20 des Schaltgeräts 4 weist einen Lastausgang 28 sowie einen betätigbaren Schalter 30 auf. An den Lastausgang 28 ist eine Zuführungsleitung eines Laststromkreises (beziehungsweise Verbraucherstromkreises) anschließbar. Der Lastausgang 28 umfasst hierzu eine Anschlussklemme, die beispielsweise ebenfalls als eine Schraub- oder Schneidklemme ausgeführt ist. Im Inneren des Gehäuses 8 sind der Lastausgang 28, sowie eine mit dem Einspeisungsmodul gekoppelte Kontaktverbindung der Kappe 10 über eine nicht näher dargestellte Schalteinrichtung und/oder eine Leiterplatte umfassende Geräteelektronik miteinander verschaltet.

Die jeweilige elektrisch, elektromechanisch, oder elektronisch realisierte Schalteinrichtung kann eine Schutzschalterfunktion, beispielsweise gegen Überlast, Kurzschluss und/oder Strombegrenzung realisieren, um den zwischen dem Einspeisungsmodul und dem Lastausgang 28 gebildeten Strompfad im Falle eines Überstroms zu trennen. Die Schalteinrichtung kann gemäß üblicher Technik auf einem magnetischen, thermischen, elektronischen und/oder pneumatischen Wirkungsprinzip basieren. Vorzugsweise weist der Schalter 30 hierbei eine mehrfarbige LED als Anzeigeelement auf, mit dem ein Betriebszustand der Schalteinrichtung einem Benutzer optisch signalisiert wird.

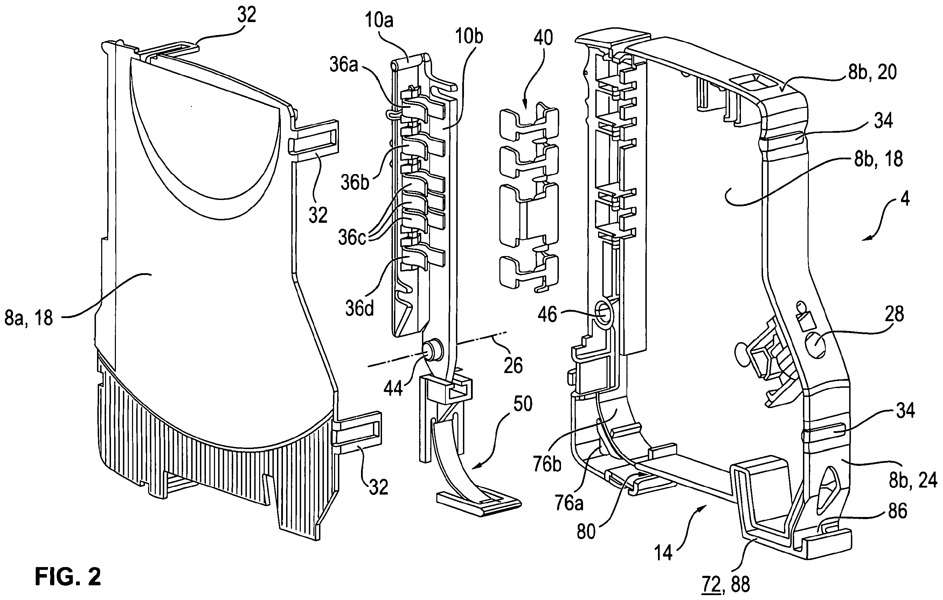

Fig. 2 zeigt das Schaltgerät 4 anhand einer Explosionsdarstellung in einem auseinander genommenen Zustand. Das Gehäuse 8 umfasst im Wesentlichen zwei Gehäusehälften 8a, 8b, die mittels Rastelementen 32, 34 zu einem geschlossenen Gehäuse 8 zusammensetzbar sind. Die deckelartige Gehäusehälfte 8a bildet hierbei die Stirnseite 18, wobei die schalenartige Gehäusehälfte 8b, die gegenüberliegende Stirnseite 18, sowie die restlichen Gehäuseseiten 12, 20, 22 und 24 umfasst.

Die Rastelemente 32 sind als etwa ösenartige Rastlaschen 32 ausgestaltet, die der Gehäusehälfte 8a in Richtung der Gehäusehälfte 8b überstehen. Die Rastlaschen 32 sind umfangsseitig an der Gehäusehälfte 8a angeordnet und umgreifen im Montagezustand komplementäre Rastzapfen 34, die entsprechend an den Gehäuseseiten 12, 20, 22 und 24 der Gehäusehälfte 8b angeordnet sind.

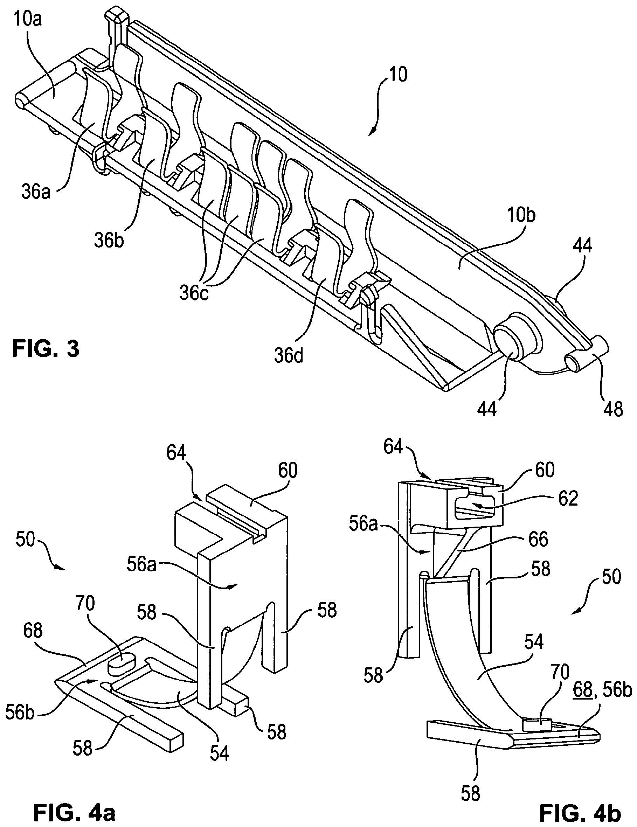

Wie insbesondere in Fig. 3 ersichtlich, trägt die Kappe 10 im Ausführungsbeispiel mehrere Koppelkontakte 36a, 36b, 36c, 36d. Diese sind in der an einem der Schaltgeräte 4 in Fig. 1 gezeigten eingeschwenkten oder geschlossenen Position (Einschwenkposition) S in der quer zur Reihenrichtung 16 verlaufenden Querrichtung 38 hinter- beziehungsweise nebeneinander angeordnet. Bei einem der in Fig. 1 dargestellten Schaltgeräte 4 befindet sich die Kappe 10 in einer ausgeschwenkten oder offenen Position (Ausschwenkposition) O.

Die Koppelkontakte 36a, 36b, 36c, 36d dienen zur Stromführung beziehungsweise zur Signal- oder Signalstromführung und sind geeigneterweise als zweischenklige Federkontakte ausgebildet. Deren Federschenkel weisen einander zugewandte Wölbungen auf, und sind freiendseitig nach außen angekröpft. Dies erleichtert beziehungsweise verbessert die Kontaktierung der Koppelkontakte 36a, 36b, 36c, 36d im Zuge eines Einschwenkvorgangs in Kontaktierrichtung nach Art einer Einführhilfe zur zuverlässigen Kontaktierung mit geräteinternen Gegenkontakten 40.

Die geräteinternen Gegenkontakte 40 sind etwa U-förmig ausgestaltet, wobei jeweils einer der U-Schenkel im Zuge der Kontaktierung von einem der Federschenkel der Koppelkontakte 36a, 36b, 36c, 36d kontaktierend übergriffen wird, während der andere U-Schenkel vom anderen Federschenkel des jeweiligen Koppelkontaktes 36a, 36b, 36c, 36d des benachbarten Schaltgeräts 4 kontaktierend übergriffen wird. Auf diese Weise werden die Kontaktverbindungen zwischen den angereihten Schaltgeräten 4 hergestellt. Die Gegenkontakte 40 sind in nicht näher dargestellter Art und Weise mit der geräteinternen Geräteelektronik sowie der Schalteinrichtung gekoppelt.

Die jeweilige Kappe 10 ist als ein im Querschnitt L-förmiges Kunststoffteil ausgebildet. Einer der L-Schenkel (Kappenschenkel) 10a trägt innenseitig die Koppelkontakte 36a, 36b, 36c, 36d und bildet praktisch eine Abdeckplatte zum Verschließen der Kontaktseite (Oberseite 22 des Gehäuses 8) des jeweiligen Schaltgerätes 4. Dabei übergreift dieser Kappenschenkel 10a als Abdeckplatte teilweise auch das im Stromverteiler 2 benachbarte Schaltgerät 4. Der weitere (zweite) L-Schenkel 10b der Kappe 10 verläuft senkrecht zu dem anderen (ersten) L- oder Kappenschenkel 10a und ist geeigneterweise an diesen angeformt. Mit diesem weiteren L- oder Kappenschenkel 10b greift die Kappe 10 im Schließ- und Kontaktzustand beziehungsweise in der entsprechenden Position S in einen Gehäuseschlitz 42 des jeweiligen Gehäuses 8 des Schaltgerätes 4 ein.

An den als Eingriffsteil wirksamen L- oder Kappenschenkel 10b sind zu Bildung der Drehachse 26 Lagerzapfen 44 angeformt, die in korrespondierenden Lagerbuchsen 46 der Gehäusehälften 8a, 8b auf deren jeweiliger stirnseitiger Innenseite eingreifen. Alternativ können in kinematischer Umkehr die Lagerzapfen 44 auch innenseitig an die Gehäusehälften 8a, 8b angeformt sein, während dann die Lagerbuchsen 46 entsprechend an der Kappe 10 und dort an deren als Eingriffsteil dienenden Kappenschenkel 10b vorgesehen sind.

Der Kappenschenkel 10b weist an seinem gehäuserückseitigen Ende einen walzenartigen Führungszapfen 48, der - wie in Fig. 2 angedeutet - mit einem Umlenkelement 50 einer Befestigungsvorrichtung 52 wirkverbunden ist.

Das in den Figuren 4a und 4b dargestellte Umlenkelement 50 weist ein etwa kreisbogenartiges, federelastisches Blattfederelement 54 auf, das an beiden Enden von jeweils einem U-förmigen Führungsfortsatz 56a, 56b zumindest teilweise umgriffen wird. Die jeweiligen vertikalen U-Schenkel 58 der Führungsfortsätze 56a, 56b sind hierzu tangential zum Blattfederelement 54 angeordnet. Die Führungsfortsätze 56a, 56b sind im Bereich der horizontalen U-Schenkel innerhalb der vertikalen U-Schenkel 58 an dem Blattfederelement 54 befestigt. Dadurch sind die vertikalen U-Schenkel 58 der Führungsfortsätze 56a, 56b im Wesentlichen senkrecht zueinander orientiert.

Der kappenseitige Führungsfortsatz 56a weist im Bereich des horizontalen U-Schenkels eine angeformte Profilkammer 60 auf, die den Führungsfortsatz 56a zum Führungsfortsatz 56b hin überragt. Die Profilkammer 60 umfasst eine nutenartige Aufnahme 62 für den Führungszapfen 48 der Kappe 10. Die Aufnahme 62 nimmt den Führungszapfen 48 im Querschnitt im Wesentlichen formschlüssig auf, wobei der Kappenschenkel 10b zumindest teilweise durch einen kappenseitigen Profilschlitz 64 der Profilkammer 60 geführt ist, sodass der Führungszapfen 48 linear verschiebebeweglich innerhalb der Aufnahme 62 gelagert ist. Die Profilkammer 60 weist zur Abstützung gegenüber dem horizontalen U-Schenkel eine keilartige Strebe 66 auf. Die Strebe 66 ist fluchtend gegenüber dem Profilschlitz 64 an der Profilkammer 60 angeordnet.

Der horizontale U-Schenkel des Führungsfortsatzes 56b ist als ein Schiebeelement 68 ausgeführt, wobei ein Stopperelement 70 an das Schiebeelement 68 angeformt ist, das den Führungsfortsatz 56b zum Führungsfortsatz 56a hin überragt.

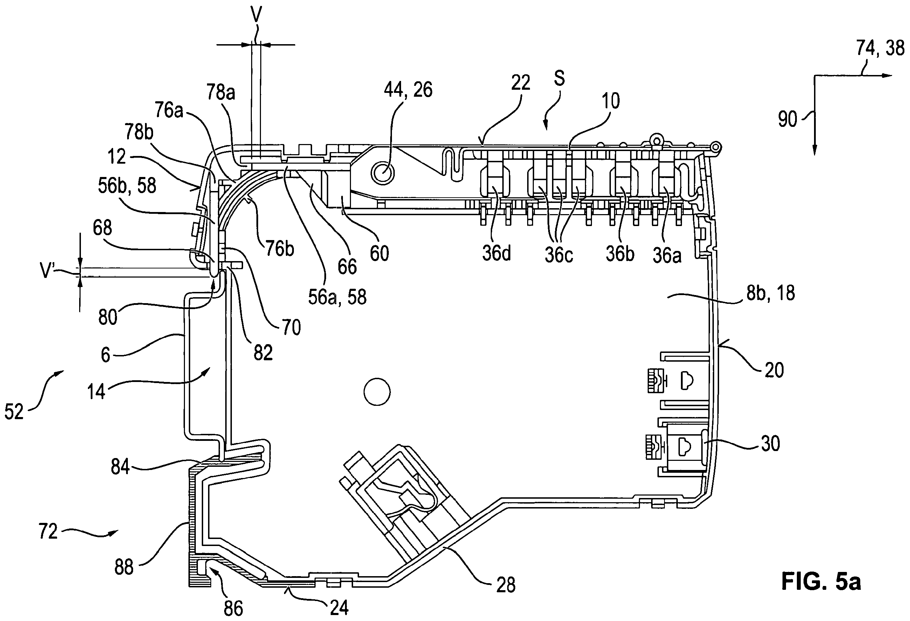

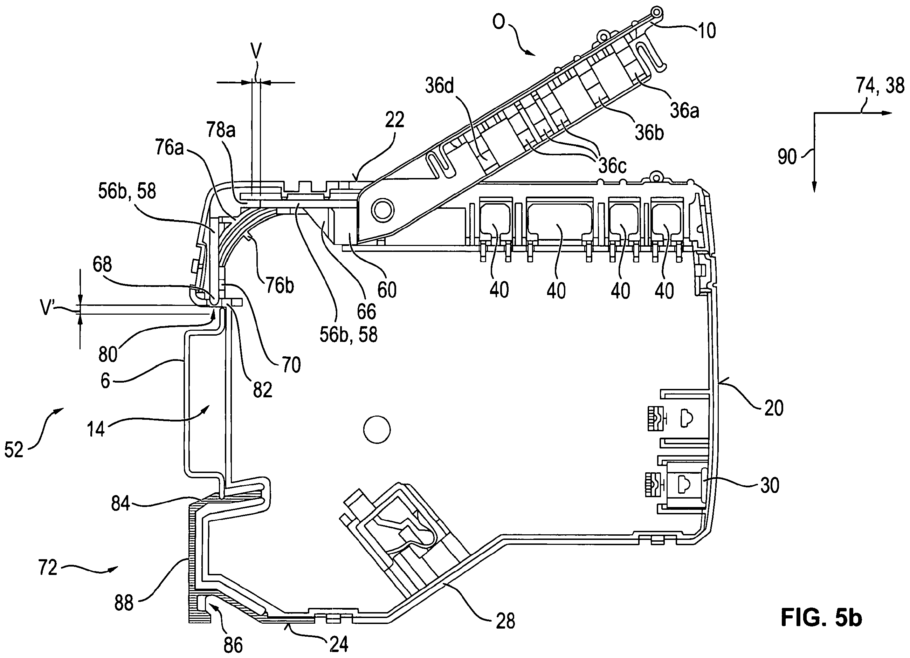

Anhand der Fig. 5a und 5b wird im Nachfolgenden die Befestigungsvorrichtung 52 des Schaltgeräts 4 näher erläutert. Die Figuren zeigen das Schaltgerät 4 in Schnittdarstellungen mit Blick auf die Innenseite der Gehäusehälfte 8b.

Fig. 5a zeigt das Schaltgerät 4 in einem befestigten Zustand an der Tragschiene 6. Hierzu weist das Schaltgerät 4 im Bereich der Aufnahme 14 die Befestigungsvorrichtung 52 auf, mit der das Schaltgerät 4 form- und kraftschlüssig an der Tragschiene 6 gehalten ist. Die Befestigungsvorrichtung 52 umfasst einerseits das mittels der Kappe 10 betätigbare Schiebeelement 68, sowie andererseits ein federelastisches Rastelement 72.

Wie in Fig. 5a und 5b vergleichsweise deutlich wird, ist die Drehachse 26 an der Oberseite 22 bezüglich einer Montagerichtung 74 beabstandet von der Tragschiene 6 angeordnet. Die Montagerichtung 74 ist parallel zu der Querrichtung 38 orientiert, und verläuft somit senkrecht zu der Tragschiene 6. Die Drehachse 26 ist in dem Ausführungsbeispiel etwa um ein Drittel der Oberseitenlänge entlang der Montagerichtung 74 von der Ebene der Tragschienen 6 zur Frontseite 20 hin versetzt angeordnet. Dadurch ist das Umlenkelement 50 in dem oberen rückseitigen Eckbereich des Gehäuses 8 angeordnet.

In diesem Eckbereich sind zwei kreisbogenartige Innenwandungen 76a, 76b des Gehäuses 8 angeordnet, in denen das Blattfederelement 54 verschiebebeweglich einliegt. Zwischen der Gehäuserückseite 12 und der gehäuseseitige Innenwandung 76a, beziehungsweise zwischen der Gehäuseoberseite 22 und der Innenwandung 76a ist jeweils ein nutenartiger Zwischenbereich 78a, 78b als Linearlager für die vertikalen U-Schenkel 58 der Führungsfortsätze 56a und 56b gebildet.

Das Gehäuse 8 weist im Bereich der Aufnahme 14 einen Gehäuseschlitz 80 auf, durch den das Schiebeelement 68 aus dem Gehäuse 8 heraus in den gehäuserückseitigen Bereich der Tragschiene 6 verschiebbar ist. Das Stopperelement 70 begrenzt hierbei einen entsprechenden Verschiebeweg V' des Schiebeelements 68 - wie in Fig. 5a ersichtlich - durch Anschlag an einer dem Gehäuseschlitz 80 zugeordneten Gehäusewand 82.

Wie in Fig. 5a ersichtlich ist das Schiebeelement 68 bei der Kappe 10 in der Einschwenkposition S derart in den Bereich der rückseitigen Aufnahme 14 verschoben, dass es die Tragschiene 6 an einer Tragschienenstirnseite formschlüssig hintergreift. Auf der gegenüberliegenden Tragschienenstirnseite ist das Rastelement 72 angeordnet.

Das in den Fig. 5a und Fig. 5b mit einer Schraffur versehene Rastelement 72 umfasst ein an das Gehäuse 8 angeformtes Hintergriffelement 84, das mit der Tragschiene 6 als Widerlager kraftschlüssig verrastet ist. Das heißt die Tragschiene 6 ist im Bereich der Aufnahme 14 von beiden Tragschienenstirnseiten her umgriffen beziehungsweise hintergriffen.

Zum Lösen des Kraftschlusses weist das Rastelement 72 eine mit dem Hintergriffelement 84 wirkverbundene Gehäuseausbuchtung 84 im Bereich der Unterseite 24 auf. Die Gehäuseausbuchtung 86 ist beispielsweise mittels eines Schraubenziehers betätigbar, das heisst eine Seitenwand 88 der Gehäuseausbuchtung 86 ist derart biegbar, dass das Hintergriffelement 84 in eine den Kraftschluss lösende Position verschwenkt wird.

Zur Montage des Schaltgeräts 4 auf der Tragschiene 6 wird das Schaltgerät 4 mit einer geöffneten - das heißt in der Aufschwenkposition O befindlichen - Kappe 10 in Montagerichtung 74 mit dem Rastelement 72 auf die Tragschiene 6 aufgeschnappt (Fig. 5b). Anschließend wird die Kappe 10 in die Einschwenkposition S verschwenkt. Bei dem Zuklappen der Kappe 10 entlang einer Verschwenkrichtung 90 (von der Aufschwenkposition O zu der Einschwenkposition S hin) wird der Führungszapfen 48 kreissegmentartig zur Gehäuserückseite 12 hin verschwenkt, das heisst der Führungszapfen 48 wird um einen Verschiebeweg V in Montagerichtung 74 bewegt. Dabei drückt der Führungszapfen 48 gegen die Wandungen der Profilkammer 60, sodass der Führungsfortsatz 56a entlang des Zwischenbereichs 78a und der Montagerichtung 74 verschoben wird.

Das elastische Blattfederelement 54 weicht der Beaufschlagung durch den Führungsfortsatz 56a durch ein Abrutschen oder Abgleiten an den Innenwandungen 76a, 76b aus, wodurch das Schiebeelement 68 bis zum Anschlag des Stopperelements 70 um den Verschiebeweg V' aus dem Gehäuse 8 heraus in eine formschlüssig verriegelnde Position in den Bereich der Tragschiene 6 gedrängt wird. Das Umlenkelement 50 wirkt somit nach Art eines Schwenk-Schubgelenks, das die Schwenkbewegung von der Aufschwenkposition O in die Einschwenkposition S in eine lineare Verschiebung des Schiebeelements 68 umsetzt.

Zur Demontage wird zunächst der Kraftschluss des Rastelements 72 mittels einer Betätigung der Gehäuseausbuchtung 86 gelöst, und anschließend durch Aufklappen der Kappe 10 in die Aufschwenkposition O der Formschluss des Schiebeelements 68 entriegelt. Dadurch ist das Schaltgerät 4 im Wesentlichen senkrecht zur Tragschiene 6, das heißt entlang der (De-)Montagerichtung 74 von der Tragschiene 6 lösbar.

Wesentlich ist, dass mit der Kappe 10 einerseits ein Öffnen und Schließen der Kontaktverbindung zwischen den Schaltgeräten 4 ermöglicht ist, sowie andererseits eine im Wesentlichen gleichzeitige Betätigung der Befestigungsvorrichtung 52 erfolgt. Insbesondere ist eine senkrecht zur Tragschiene 6 orientierte Montagebeziehungsweise Demontagerichtung 74 des Schaltgeräts 4 wünschenswert, was in gedrängten Einbausituationen wie beispielsweise einem Schaltschrank insbesondere im Zuge des Stromverteilers 2 besonders vorteilhaft ist. Des Weiteren ist durch die Ausgestaltung des Umlenkelements 50 nach Art eines Schub-Schwenkgelenks ein konstruktiv einfacher, kostengünstiger und langlebiger Schwenkmechanismus realisiert, mittels dem das Schaltgerät 4 einfach lösbar auf der Tragschiene 6 befestigbar ist.

### Bezugszeichenliste

- 2: Stromverteiler
- 4: Schaltgerät
- 6: Tragschiene
- 8: Gehäuse
- 8a, 8b: Gehäusehälfte
- 10: Kappe
- 10a, 10b: L-Schenkel/Kappenschenkel
- 12: Gehäuserückseite
- 14: Aufnahme
- 16: Reihenrichtung/Tragschienenlängsrichtung
- 18: Gehäusestirnseite
- 20: Gehäusefrontseite
- 22: Gehäuseoberseite
- 24: Gehäuseunterseite
- 26: Drehachse
- 28: Lastausgang
- 30: Schalter
- 32: Rastelement/Rastlasche
- 34: Rastelement/Rastzapfen
- 36a, 36b, 36c, 36d: Koppelkontakt
- 38: Querrichtung
- 40: Gegenkontakt
- 42: Gehäuseschlitz
- 44: Lagerzapfen
- 46: Lagerbuchse
- 48: Führungszapfen
- 50: Umlenkelement
- 52: Befestigungsvorrichtung
- 54: Blattfederelement
- 56a, 56b: Führungsfortsatz
- 58: U-Schenkel
- 60: Profilkammer
- 62: Aufnahme
- 64: Profilschlitz
- 66: Strebe
- 68: Schiebeelement
- 70: Stopperelement
- 72: Rastelement
- 74: Montagerichtung/Demontagerichtung
- 76a, 76b: Innenwandung
- 78a, 78b: Zwischenbereich
- 80: Gehäuseschlitz
- 82: Gehäusewand
- 84: Hintergriffelement
- 86: Gehäuseausbuchtung
- 88: Seitenwand
- 90: Verschwenkrichtung

- S: Einschwenkposition
- O: Ausschwenkposition
- V, V': Verschiebeweg

## Patentansprüche

1. Schaltgerät (4) umfassend ein Gehäuse (8) mit einer um eine Drehachse (26) schwenkbaren Kappe (10) und eine Befestigungsvorrichtung (52) für eine direkte Montage auf einer Tragschiene (6),
- wobei die Kappe (10) an einer der Gehäuseinnenseite zugewandten Seite mindestens einen Koppelkontakt (36a, 36b, 36c, 36d) zur elektrischen und/oder signaltechnischen Kontaktverbindung mit mindestens einem stirnseitig an das Gehäuse (8) anreihbaren, benachbarten Schaltgerät (4) aufweist,
- wobei bei einem Verschwenken der Kappe (10) ein Schließen oder Lösen der Kontaktverbindung erfolgt,
- wobei bei einem Verschwenken der Kappe (10) ein Verriegeln oder Entriegeln der Befestigungsvorrichtung (52) erfolgt, und
- wobei die Befestigungsvorrichtung (52) ein am Gehäuse (8) angeformtes, federelastisches Rastelement (72) zur kraftschlüssigen Befestigung an einer Tragschienenstirnseite sowie ein innerhalb des Gehäuses (8) linear verschiebbar gelagertes und mit der Kappe (10) gekoppeltes Schiebeelement (68) zur formschlüssigen Befestigung an der dem Rastelement (72) gegenüberliegenden Tragschienenstirnseite umfasst.

2. Schaltgerät (4) nach Anspruch 1,
- wobei das Rastelement (72) mit einer betätigbaren Gehäuseausbuchtung (86) gekoppelt ist, und
- wobei durch die Gehäuseausbuchtung (86) die kraftschlüssige Befestigung an der Tragschienenstirnseite lösbar ist.

3. Schaltgerät (4) nach Anspruch 1 oder 2,
wobei die Kappe (10) an der drehachsenseitigen Schmalseite mit einem federelastischen Umlenkelement (50) gekoppelt ist, das die Verschwenkbewegung der Kappe (10) in eine zur Verschwenkrichtung (38) und Tragschienenlängsrichtung (16) quer gerichtete Linearbewegung des Schiebeelements (68) umsetzt.

4. Schaltgerät (4) nach Anspruch 3,
- wobei das Umlenkelement (50) ein etwa kreisbogenartiges Blattfederelement (54) aufweist, und
- wobei das Schiebeelement (68) tangential fluchtend an das Blattfederelement (54) gekoppelt ist.

5. Schaltgerät (4) nach Anspruch 4,
wobei in einem der Drehachse (26) zugeordneten Eckbereich des Gehäuses (8) zwei kreisbogenartige und radial zueinander beabstandete Innenwandungen (76a, 76b) angeordnet sind, in denen das Blattfederelement (54) im Bereich seiner kreisbogenartigen Bauchung schiebebeweglich einliegt.

6. Schaltgerät (4) nach einem der Ansprüche 3 bis 5,
wobei die Kappe (10) an der drehachsenseitigen Schmalseite einen Führungszapfen (48) aufweist, der innerhalb einer nutenartigen Profilkammer (60) des Umlenkelements (50) angeordnet ist.

7. Schaltgerät (4) nach Anspruch 6,
wobei die Drehachse (26) der Kappe (10) zwischen dem Führungszapfen (48) und den mindestens einen Koppelkontakt (36a, 36b, 36c, 36d) angeordnet ist.

8. Schaltgerät (4) nach Anspruch 6 oder 7,
- wobei das Schiebeelement (68) und die Profilkammer (60) jeweils blattfederseitig einen etwa U-förmigen Führungsfortsatz (56a, 56b) aufweisen,
- wobei die vertikalen U-Schenkel (58) der Führungsfortsätze (56a, 56b) jeweils tangential zum Blattfederelement (54) orientiert sind, und
- wobei das Blattfederelement (54) jeweils im inneren Bereich der horizontalen U-Schenkel angebunden ist.

9. Schaltgerät (4) nach Anspruch 8,
wobei die vertikalen U-Schenkel (58) linear verschieblich zwischen dem Gehäuse (8) und der gehäuseseitigen Innenwandung (76a) gelagert sind.

10. Schaltgerät (4) nach Anspruch 8 oder 9,
wobei der horizontale U-Schenkel des schiebeelementseitigen Führungsfortsatzes (56b) ein noppenartiges Stopperelement (70) aufweist, das die Linearbewegung des Schiebeelements (68) durch Anschlag an einer Gehäusewand (82) in Richtung auf eine Tragschienenstirnseite hin begrenzt.

## Claims

1. Switching device (4) comprising a housing (8) with a cap (10) which can pivot about a rotation axis (26), and comprising a fastening apparatus (52) for direct mounting on a mounting rail (6),
- wherein the cap (10) has, on a side which faces the housing inner side, at least one coupling contact (36a, 36b, 36c, 36d) for electrical and/or signal-transmitting contact connection to at least one adjacent switching device (4) which can be arranged in a row on the end side of the housing (8),
- wherein, when the cap (10) is pivoted, the contact connection is closed or released,
- wherein, when the cap (10) is pivoted, the fastening apparatus (52) is locked or unlocked, and
- wherein the fastening apparatus (52) comprises a spring-elastic latching element (72), which is integrally formed on the housing (8), for force-fitting fastening to a mounting rail end side and also comprises a sliding element (68), which is linearly displaceably mounted within the housing (8) and is coupled to the cap (10), for interlocking fastening to the mounting rail end side which is situated opposite the latching element (72).

2. Switching device (4) according to Claim 1,
- wherein the latching element (72) is coupled to an operable housing recess (86), and
- wherein the force-fitting fastening to the mounting rail end side can be released by the housing recess (86) .

3. Switching device (4) according to Claim 1 or 2, wherein the cap (10), on the rotation axis-side narrow side, is coupled to a spring-elastic deflection element (50) which converts the pivoting movement of the cap (10) into a linear movement of the sliding element (68), which linear movement is oriented transversely in relation to the pivoting direction (38) and mounting rail longitudinal direction (16).

4. Switching device (4) according to Claim 3,
- wherein the deflection element (50) has a leaf spring element (54) which is approximately in the shape of an arc of a circle, and
- wherein the sliding element (68) is coupled to the leaf spring element (54) in a tangentially aligned manner.

5. Switching device (4) according to Claim 4,
wherein two inner walls (76a, 76b) which are in the shape of an arc of a circle and radially spaced apart from one another and in which the leaf spring element (54) is situated such that it can slide in the region of its convex portion which is in the form of an arc of a circle are arranged in a corner region of the housing (8), which corner region is associated with the rotation axis (26).

6. Switching device (4) according to one of Claims 3 to 5,
wherein the cap (10) has, on the rotation axis-side narrow side, a guide pin (48) which is arranged within a slot-like profile chamber (60) of the deflection element (50).

7. Switching device (4) according to Claim 6,
wherein the rotation axis (26) of the cap (10) is arranged between the guide pin (48) and the at least one coupling contact (36a, 36b, 36c, 36d).

8. Switching device (4) according to Claim 6 or 7,
- wherein the sliding element (68) and the profile chamber (60) each have, on the leaf-spring side, an approximately U-shaped guide projection (56a, 56b),
- wherein the vertical U-limbs (58) of the guide projections (56a, 56b) are each oriented tangentially in relation to the leaf spring element (54), and
- wherein the leaf spring element (54) is connected in the inner region of the horizontal U-limbs in each case.

9. Switching device (4) according to Claim 8,
wherein the vertical U-limbs (58) are mounted in a linearly displaceable manner between the housing (8) and the housing-side inner wall (76a).

10. Switching device (4) according to Claim 8 or 9, wherein the horizontal U-limb of the sliding element-side guide projection (56b) has a nub-like stopper element (70) which limits the linear movement of the sliding element (68) in the direction of a mounting rail end side by stopping against a housing wall (82).

## Revendications

1. Appareil de commutation (4) comprenant un boîtier (8) avec une coiffe (10) pouvant pivoter autour d'un axe de rotation (26) et un dispositif de fixation (52) pour un montage direct sur un rail de support (6),
- dans lequel la coiffe (10) présente sur un côté tourné vers le côté intérieur du boîtier au moins un contact de couplage (36a, 36b, 36c, 36d) pour la liaison électrique et/ou de signalisation avec au moins un appareil de commutation voisin (4), pouvant être aligné côté frontal sur le boîtier (8),
- dans lequel il se produit une fermeture ou une ouverture de la liaison de contact lors d'un pivotement de la coiffe (10),
- dans lequel il se produit un verrouillage ou un déverrouillage du dispositif de fixation (52) lors d'un pivotement de la coiffe (10), et
- dans lequel le dispositif de fixation (52) comprend un élément d'encliquetage à ressort (72), formé sur le boîtier (8), pour la fixation dynamique à un côté frontal du rail de support ainsi qu'un élément de glissement (68) supporté de façon déplaçable linéairement à l'intérieur du boîtier (8) et couplé à la coiffe (10) pour la fixation par emboîtement au côté frontal du rail de support opposé à l'élément d'encliquetage (72).

2. Appareil de commutation (4) selon la revendication 1,
- dans lequel l'élément d'encliquetage (72) est couplé à une protubérance actionnable du boîtier (86), et
- dans lequel la fixation dynamique au côté frontal du rail de support peut être libérée au moyen de la protubérance de boîtier (86).

3. Appareil de commutation (4) selon une revendication 1 ou 2, dans lequel la coiffe (10) est couplée sur le côté étroit côté axe de rotation à un élément de déviation à ressort (50), qui convertit le mouvement de pivotement de la coiffe (10) en un mouvement linéaire de l'élément de glissement (68) orienté transversalement à la direction de pivotement et à la direction longitudinale (16) du rail de support.

4. Appareil de commutation (4) selon la revendication 3,
- dans lequel l'élément de déviation (50) présente un élément de lame de ressort sensiblement en forme d'arc de cercle (54), et
- dans lequel l'élément de glissement (68) est couplé en alignement tangentiel à l'élément de lame de ressort (54).

5. Appareil de commutation (4) selon la revendication 4, dans lequel deux parois intérieures (76a, 76b) en forme d'arc de cercle et radialement espacées l'une de l'autre sont disposées dans une région de coin du boîtier (8) associée à l'axe de rotation (26), dans lesquelles l'élément de lame de ressort (54) s'applique en mouvement glissant dans la région de sa courbure en arc de cercle.

6. Appareil de commutation (4) selon l'une quelconque des revendications 3 à 5, dans lequel la coiffe (10) présente sur le côté étroit côté axe de rotation un tourillon de guidage (48), qui est disposé à l'intérieur d'une chambre profilée en forme de rainure (60) de l'élément de déviation (50).

7. Appareil de commutation (4) selon la revendication 6, dans lequel l'axe de rotation (26) de la coiffe (10) est disposé entre le tourillon de guidage (48) et ledit au moins un contact de couplage (36a, 36b, 36c, 36d).

8. Appareil de commutation (4) selon une revendication 6 ou 7,
- dans lequel l'élément de glissement (68) et la chambre profilée (60) présentent respectivement côté lame de ressort un prolongement de guidage sensiblement en forme de U (56a, 56b),
- dans lequel les branches verticales du U (58) des prolongements de guidage (56a, 56b) sont chacune orientées tangentiellement à l'élément de lame de ressort (54), et
- dans lequel l'élément de lame de ressort (54) est attaché respectivement dans la région intérieure des branches horizontales du U.

9. Appareil de commutation (4) selon la revendication 8, dans lequel les branches verticales du U (58) sont supportées de façon déplaçable linéairement entre le boîtier (8) et la paroi intérieure côté boîtier (76a).

10. Appareil de commutation (4) selon une revendication 8 ou 9, dans lequel les branches horizontales du U du prolongement de guidage côté élément de glissement (56b) présentent un élément d'arrêt en forme de bosse (70), qui limite le mouvement linéaire de l'élément de glissement (68) par butée sur une paroi de boîtier (82) en direction d'un côté frontal du rail de support.
